# EUROPÄISCHE PATENTSCHRIFT

(11) **EP 2 569 736 B1**
(45) Veröffentlichungstag und Bekanntmachung des Hinweises auf die Patenterteilung: **02.09.2015**
(21) Anmeldenummer: 11711887.7
(22) Anmeldetag: 01.04.2011
(51) Int. Cl.: G06K 19/077, H01L 25/065

(54) **DOKUMENT UND VERFAHREN ZUR HERSTELLUNG EINES DOKUMENTS**
DOCUMENT AND METHOD OF MAKING A DOCUMENT
DOCUMENT ET PROCEDE DE SON FABRICATION

(30) Priorität: 12.05.2010 DE 102010028926
(43) Veröffentlichungstag der Anmeldung: 20.03.2013
(73) Patentinhaber: Bundesdruckerei GmbH, 10958 Berlin (DE)
(72) Erfinder: KLOESER, Joachim, 10779 Berlin (DE); PAESCHKE, Manfred, 16352 Basdorf (DE); FISCHER, Joerg, 13053 Berlin (DE); ASCHENBRENNER, Rolf, Berlin 12203 (DE); KALLMAYER, Christine, Falkensee 14612 (DE)
(74) Vertreter: Richardt Patentanwälte PartG mbB
(86) Internationale Anmeldenummer: PCT/EP2011/055142
(87) Internationale Veröffentlichungsnummer: WO 2011/141232

(56) Entgegenhaltungen:
- WO-A2-01/52184
- DE-A1- 10 258 670
- DE-U1- 29 819 389
- US-B1- 6 378 774

## Beschreibung

Die Erfindung betrifft ein Dokument sowie ein Verfahren zur Herstellung eines Dokuments.

Aus der WO 2006/019587 A1 ist ein Radio Frequency Identification (RFID) Tag mit einer induktiv gekoppelten Antenne bekannt. Die Kopplung zwischen der Antenne und einer integrierten Schaltung erfolgt drahtlos über eine Spule. Die Antenne und die induktiv über die Spule mit der Antenne gekoppelte Schaltung liegen in derselben Schaltungsebene. Durch die drahtlose Kopplung der Antenne und der integrierten Schaltung soll ein kostengünstigerer und kleinerer RFID-Tag für extrem niedrigpreisige Anwendungen geschaffen werden.

Aus DE 102 58 670 A1 ist ein Transponder zur berührungslosen Übertragung von Daten bekannt, die zwei gemeinsam betreibbare Schwingkreise aufweist, die galvanisch getrennt ausgebildet sind. Die Ansprüche wurden gegen dieses Dokument abgegrenzt.

Aus DE 298 19 389 U1 ist eine Telefonkarte bekannt, die zwei eigenständige, separate Chips enthält; einer davon lässt sich als SIM-Modul aus der Karte herausbrechen.

US 6,378,774 offenbart eine Chipkarte mit einem Chip, der induktiv mit der Sendeantenne der Karte gekoppelt ist.

Demgegenüber liegt der Erfindung die Aufgabe zugrunde, ein verbessertes Dokument sowie ein Verfahren zur Herstellung eines solchen Dokuments zu schaffen.

Diese Aufgabe wird jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Dokument mit einem Dokumentenkörper geschaffen, wobei in den Dokumentenkörper ein elektronisches Gerät integriert ist.

Das elektronische Gerät beinhaltet mehrere elektronische Komponenten, die in mehreren Schaltungsebenen in dem Dokument verteilt angeordnet sind, wobei die Komponenten verschiedener Schaltungsebenen voneinander galvanisch getrennt sind.

Unter einem "Dokument" wird hier jedes Dokument verstanden, welches ein elektronisches Gerät, d.h. beispielsweise zumindest eine integrierte elektronische Schaltung und deren periphere Komponenten, beinhaltet, wobei das Dokument zum Beispiel Kunststoff- und/oder Papier-basiert sein kann. Bei dem Dokument kann es sich um ein Wert- oder Sicherheitsdokument, wie zum Beispiel um ein ID-Dokument, d.h. ein Ausweisdokument, wie zum Beispiel einen Personalausweis, Reisepass, Führerschein, Fahrzeugbrief, Fahrzeugschein oder Firmenausweis, oder ein Zahlungsmittel, wie zum Beispiel eine Banknote, eine Kreditkarte oder einen sonstigen Berechtigungsnachweis, wie zum Beispiel eine Eintrittskarte, Fahrschein, insbesondere ein electronic ticket, einen Frachtbrief, ein Visum oder dergleichen, handeln. Insbesondere kann es sich beim Dokument um eine Chipkarte handeln. Unter einem

Dokument wird hier auch ein Dokument verstanden, welches buchartig ausgebildet ist, wie dies zum Beispiel bei einem Reisepass der Fall ist. Unter einem Dokument wird auch ein sogenanntes Funketikett verstanden, welches auch als RFID-Tag oder RFID-Label bezeichnet wird.

Unter einem "elektronischen Gerät" wird hier insbesondere ein Datenverarbeitungssystem verstanden, welches beispielsweise eine kryptografische Funktion zur Signierung und/oder Authentifizierung, eine Bezahlfunktion oder eine andere Funktion zur Durchführung einer Finanztransaktion, eine Ausweisfunktion, insbesondere mit Bildwiedergabe auf einer Anzeigevorrichtung, aufweist. Insbesondere kann das elektronische Gerät die Funktionalitäten implementieren, wie sie an sich für maschinenlesbare Reisedokumente (MRTD) bekannt sind, insbesondere kryptografische Protokolle, wie zum Beispiel ein Basis Access Control (BAC) und/oder ein Extended Access Control (EAC) und/oder ein Password Authenticated Connection Establishment (PACE)-Protokoll, wie sie von der internationalen Luftfahrtbehörde (ICAO) bzw. dem Bundesamt für Sicherheit in der Informationstechnik (BSI) spezifiziert sind.

Nach der Erfindung sind die Komponenten des elektronischen Geräts, die in verschiedenen Schaltungsebenen angeordnet sind, optisch zur Energie- und/oder Datenübertragung gekoppelt.

Nach Ausführungsformen der Erfindung sind die verschiedenen Schaltungsebenen kontaktlos zur Energie- und/oder Datenübertragung gekoppelt, wobei eine optische Kopplung vorgesehen ist. Von besonderem Vorteil ist hierbei, dass keine Vias und Durchkontaktierungen zwischen den Schaltungsebenen vorgenommen werden müssen. Auf diese Weise können verschiedene galvanisch getrennte, funktionale Leitungsebenen mit geringem Aufwand je nach Bedarf miteinander zu Energie- und Datenübertragung angeordnet beziehungsweise gekoppelt werden. Insbesondere wird es hierdurch ermöglicht, dass die Komponenten des elektronischen Geräts und deren Verdrahtung ausschließlich in den Schaltungsebenen angeordnet sind und der Dokumentenkörper keine Verdrahtung zwischen den Schaltungsebenen aufweist, dass heißt keine sogenannten Vias oder Durchkontaktierungen.

Hierzu kann auf jeder Schaltungsebene zumindest ein Kopplungselement zur optischen Kopplung mit einer oder mehreren der anderen Schaltungsebenen vorgesehen sein.

Nach einer Ausführungsform der Erfindung weist jede der Schaltungsebenen zumindest ein Koppelelement auf, und die Koppelelemente sind untereinander zur Bildung eines Bus in dem Dokumentenkörper angeordnet. Mit "Bus" ist hier insbesondere ein Kommunikationskanal und/oder ein Energieübertragungskanal gemeint.

Die Ausbildung eines geringen Abstandes zwischen den Koppelflächen kann durch Verwendung eines guten Isolators für das Material des Dokumentenkörpers erreicht werden, der einen entsprechend geringen Abstand zwischen den kapazitiven Koppelflächen zulässt, um diese gleichstrommäßig von einander zu isolieren.

Zur Erreichung einer möglichst hohen relativen Dielektrizitätskonstante kann das Material des Dokumentenkörpers Pigmente beinhalten, die zu einer Erhöhung der relativen Dielektrizitätskonstanten führen. Hierbei kann es sich beispielsweise um Bariumtitanatpigmente handeln. Diese können in tetragonaler und damit perovskitischer Kristallstruktur vorliegen, was zu einer besonders starken Erhöhung der relative Dielektrizitätszahl des Materials beiträgt. Beispielsweise können BaTi03 Pigmente von zum Beispiel zwischen etwa 350 nm und 450 nm, bevorzugt zwischen 380 nm und 420 nm, und besonders bevorzugt von etwa 400 nm Größe eingesetzt werden.

Nach einer Ausführungsform der Erfindung bildet das Material des Dokumentenkörpers eine polymere Matrix, in der die Pigmente verteilt angeordnet sind.

Nach einer Ausführungsform der Erfindung besteht der Dokumentenkörper aus einem Material, das eine relative Dielektrizitätszahl von zwischen 20 bis 100, vorzugsweise zwischen 30 und 80 hat.

Nach einer Ausführungsform der Erfindung beinhaltet der Dokumentenkörper Polycarbonat, welches die polymere Matrix für die Bariumtitanatpigmente bildet. Die relative Dielektrizitätskonstante des Polycarbonat lässt sich so auf einen Wert von über 20, insbesondere über 30 bis etwa 100, bringen.

Zur Realisierung einer Ausführungsform mit optischer Kopplung zwischen den Schaltungsebenen können die Kopplungselemente jeweils einen optischen Sender und einen optischen Empfänger beinhalten. Beispielsweise hat jedes Kopplungselement eine Sendediode und einen fotosensitiven Empfänger. Der optische Sender und der optische Empfänger können an unterschiedlichen Stellen innerhalb einer Schaltungsebene angeordnet sein.

Nach einer Ausführungsform der Erfindung ist eines der Kopplungselemente als diskretes Bauelement ausgebildet, welches über eine Leiterbahn innerhalb seiner Schaltungsebene mit einer der elektronischen Komponenten dieser Schaltungsebene kontaktiert ist. Gemäß einer alternativen Ausführungsform ist das Kopplungselement nicht als diskretes Bauelement, sondern als integraler Bestandteil dieser elektronischen Komponente ausgebildet.

Nach einer Ausführungsform der Erfindung bilden die Kopplungselemente mehrerer der Schaltungsebenen einen Powerbus zur Energieübertragung zwischen den verschiedenen Schaltungsebenen und/oder einen Datenbus. Beispielsweise sind die Kopplungselemente hierzu in einer zu den Schaltungsebenen vertikalen Richtung übereinander in dem Dokumentenkörper angeordnet. Hierdurch kann ein drahtloser Powerbus und/oder Datenbus realisiert werden.

Nach einer Ausführungsform der Erfindung hat das Dokument in zumindest einer seiner Schaltungsebenen eine Antenne zur induktiven Einkopplung von Energie. Beispielsweise dient die Antenne zur Einkopplung von Energie aus einem externen Lesegerät und/oder zur Kommunikation mit dem externen Lesegerät, zum Beispiel nach einem RFID- oder Near Field Communication (NFC)-Verfahren. Bei einer induktiven Kopplung von Schaltungsebenen des Dokuments erfolgt diese dann bei einer Frequenz, die von der Resonanzfrequenz der Antenne hinreichend verschieden ist, sodass es nicht zu Interferenzen zwischen der Kommunikation mit dem externen Lesegerät und der Datenübertragung zwischen den Komponenten verschiedener Schaltungsebenen des Dokuments kommen kann. Die induktive Kopplung der verschiedenen Schaltungsebenen kann aber auch bei gleichen oder überlappenden Frequenzen erfolgen, insbesondere dann, wenn über ein Protokoll festgelegt ist, welche Komponenten zu einem bestimmten Zeitpunkt miteinander kommunizieren können. Beispielsweise kann das für die Kommunikation zwischen den Komponenten zur Verfügung stehende Frequenzband nach einem Zeitschlitzverfahren (time division multiple access- TDMA) verwendet werden.

Nach einer Ausführungsform der Erfindung hat eine der Schaltungsebenen des Dokuments ein separates Kopplungselement für jede andere der Schaltungsebenen. Dies hat den Vorteil einer besonders schnellen Kommunikation zwischen dieser Schaltungsebene und jeder anderen Schaltungsebene.

Nach einer Ausführungsform der Erfindung hat der Dokumentenkörper einen Schichtaufbau, wobei durch jede Schicht eine der Schaltungsebenen definiert wird. Eine Schaltungsebene kann ein oder mehrere elektronische Komponenten tragen, die innerhalb einer Schaltungsebene durch Leiterbahnen galvanisch miteinander verbunden sein können. Beispielsweise können die Leiterbahnen auf einer der Schaltungsebenen aufgedruckt sein.

Eine Schaltungsebene kann eine elektronische Komponente beinhalten, die ihrerseits mehrere Schaltungsebenen aufweist. Eine solche Komponente wird hier als zu der betreffenden Schaltungsebene des Dokuments gehörend bezeichnet. Die Komponente kann z.B. mit gedruckten Leiterbahnen einer Schaltungsebene des Dokuments elektrisch kontaktiert sein, wobei für diese elektrische Kontaktierung verschiedene Bonding- und/oder Montage-Techniken zum Einsatz kommen können.

Nach einer Ausführungsform der Erfindung sind die Schichten des Dokumentenkörpers miteinander stoffschlüssig verbunden, insbesondere durch ein Laminierverfahren. Besonders vorteilhaft ist, wenn mehrere Schichten des Dokuments aus demselben Kunststoff bestehen, da dann durch ein Heiß-Kalt-Laminierverfahren ein quasi monolithisches Laminat entsteht. Dies hat den besonderen Vorteil einer hohen Sicherheit gegen Fälschungen und Manipulationen, da sich die einzelnen Schichten des Dokumentenkörpers grundsätzlich nicht mehr voneinander trennen lassen, da sie aufgrund der stoffschlüssigen Verbindung ineinander übergegangen sind und so in einem isotropen Dokumentenkörper aufgegangen sind.

Beispielsweise bestehen die Schichten des Dokumentenkörpers aus einem Kunststoff, beispielsweise Polycarbonat (PC), insbesondere Bisphenol-A-Polycarbonat, Polyethylenterephthalat (PET), deren Derivaten wie Glykol-modifiziertem PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplatischen Elastomeren (TPE), insbesondere thermoplastischem Polyurethan (TPU), Acrylnitril-Butadien-Styrol (ABS), und/oder deren Derivate.

Nach einer Ausführungsform der Erfindung hat das elektronische Gerät, welches in dem Dokumentenkörper in mehreren Schaltungsebenen verteilt realisiert ist, ein oder mehrere der folgenden elektronischen Komponenten: Mikroprozessor, Anzeigevorrichtung, elektronischer Speicher, Eingabeelement, Sensor, insbesondere biometrischer Sensor, wie zum Beispiel Fingerabdrucksensor, Kamera, kryptografische Logikkomponente, RFID-Komponente, NFC-Komponente, Aktuator, Spannungsregler, Touchsensor zur Realisierung eines Touchpad, Drucksensor, Pufferkondensator. Insbesondere kann das elektronische Gerät ein oder mehrere Chips beinhalten.

Unter einem "Chip" wird hier insbesondere ein Halberleiterchip mit einer integrierten elektronischen Schaltung verstanden. Bei dem Chip kann es sich um einen Speicherchip zur Speicherung von Daten und/oder zur Kommunikation mit einem externen Lesegerät und/oder eine Datenverarbeitungseinheit (µProzessor) und/oder einen Spannungsregler für das Powermanagement handeln. Unter einem Chip wird erfindungsgemäß auch eine integrierte elektronische Schaltung verstanden, die ganz oder teilweise drucktechnisch aufgebracht ist, wie z.B. mittels leitfähiger Tinte, insbesondere eine polymerelektronische Schaltung.

Nach Ausführungsformen der Erfindung handelt es sich bei dem Chip um eine gedünnte integrierte Schaltung. Unter einer gedünnten integrierten Schaltung wird eine integrierte Schaltung verstanden, welche eine Dicke von höchstens 200 µm, bevorzugt von höchstens 100 µm, weiter bevorzugt von höchstens 80 µm und am meisten bevorzugt von höchstens 60 µm aufweist. Weiter weist die integrierte Schaltung eine Dicke von wenigstens 1 µm, bevorzugt wenigstens 10 µm, weiter bevorzugt wenigstens 15 µm, weiter bevorzugt wenigstens 20 µm und am meisten bevorzugt von wenigstens 25 µm auf.

Nach Ausführungsformen der Erfindung ist die integrierte Schaltung ungehaust. Dadurch wird eine besonders kompakte Anordnung in dem Laminat des Dokuments erreicht, sodass das Dokument eine besonders geringe Bauhöhe aufweisen kann. Ferner ist dadurch eine gute Einbindung der integrierten Schaltung in das Dokument möglich, sodass diese ein integraler Bestandteil des Dokuments ist. Ein weiterer Vorteil ist die Flexibilität der integrierten Schaltung.

Nach einer Ausführungsform der Erfindung handelt es sich bei dem Chip um ein Surface Mount Device (SMD) oder ein Bare Die, wobei die Kontaktierungselemente je eine Kontaktstelle zur Kontaktierung des Chips aufweisen.
Nach einer Ausführungsform der Erfindung handelt es sich bei dem Chip um ein gehäustes Bauelement, wie z.B. ein Surface Mount Device (SMD), oder um einen sogenannten Flip-Chip. Bevorzugt werden "ungehäuste" Bare Die als Flip Chip Bauteile verarbeiten. Man kann aber auch Wafer Level CSP (WL-CSP, Chip Size Package) oder klassische CSP als Alternative zu den Flip Chips verwenden.

Unter einem "Flip-Chip" wird hier insbesondere ein Chip verstanden, der mit den Kontaktstellen nach unten kontaktiert wird; unter einem "bare Die" wird hier insbesondere ein ungehauster Chip verstanden; unter einem "Chip Size Package" (CSP) wird hier ein gehauster Chip verstanden, wobei das Gehäuse nicht wesentlich gröβer als der Chip selbst ist; unter "wafer level CSP" werden hier insbesondere Techniken verstanden, durch die Kontaktierungs- und Schutzmaßnahmen für einen Chip angewendet werden, solange sich dieser noch auf dem Wafer befindet.

Nach einer Ausführungsform der Erfindung können Surface Mounted Device (SMD) Komponenten als passive Bauelemente, die z.B. zur Beschaltung der aktiven Chips dienen, eingesetzt werden.

Weiterhin ist der Chip in einer bevorzugten Ausführungsform der Erfindung durch Flip-Chip-Klebetechnik in das Wert- oder Sicherheitsdokument eingebracht und mit der Antenne verbunden. Beispielsweise wird der integrierte Schaltkreis über einen anisotrop leitfähigen Kleber mit der Antenne elektrisch und mechanisch verbunden. Unter einem anisotrop leitfähigen Kleber wird hier ein Kleber verstanden, dessen elektrische Leitfähigkeit eine Vorzugsrichtung aufweist.

Der anisotrop leitfähigen Kleber (Anisotropic Conductive Adhesive - ACA) kann als Paste (Anisotropic Conductive Paste - ACP) oder als Film (Anisotropic Conductive Film - ACF) aufgebracht werden. Es kann aber auch ein nicht leitender Kleber (NCF) oder kein Kleber eingesetzt werden. Als besonders vorteilhaft hat sich die Beaufschlagung der bumps mit Druck bei erhöhter Temperatur kombiniert mit Klebebonden mit einem ACA oder ACF für das Bonding des Flip Chips herausgestellt. Beispielsweise kann der anisotrop leitfähigen Kleber so ausgebildet sein, dass er in etwa gleichmäßig räumlich verteilte elektrisch leitfähige Partikel enthält. Durch die Aufbringung von Druck auf die Klebefläche entsteht die Anisotropie der elektrischen Leitfähigkeit.

Ferner ist auch die Verwendung von isotrop leitfähigen Kleber (isotropic conductive adhesive - ICA,) möglich , um z.B, die Bumps des Chip elektrisch zu kontaktieren. Unter einem "Bump" wird hier insbesondere eine Kontaktstelle einer elektronischen Komponente, insbesondere eines Chip, verstanden. Diese kann zum Beispiels mittels eines ACF elektrisch kontaktiert werden und/oder durch Erwärmung des Lot, so dass eine Lötstelle entsteht. Bei der Erwärmung des Lots kann dies plastisch verformbar werden, an seiner Oberfläche schmelzen oder vollständig schmelzen, je nach Bonding Verfahren und der Temperatur, auf die die Kontakstelle aufgeheizt wird. Insbesondere im letzteren Fall spricht man auch von einem "Solder Bump". Ausführungsformen der Erfindung sind besonders vorteilhaft, da aufgrund der dreidimensional verteilten Anordnung der Komponenten des elektronischen Geräts in dem Dokumentenkörper eine hohe Integrationsdichte und eine komplexe Funktionalität des elektronischen Geräts realisierbar ist, und gleichzeitig das Dokument mechanisch stabil und doch flexibel ausgebildet sein kann, bei gleichzeitig optimalem Schutz gegen Manipulation. Dies wird insbesondere dadurch erreicht, dass die einzelnen Schaltungsebenen nicht durch Vias miteinander gekoppelt sind, die bei mechanischer Beanspruchung leicht brechen können.

Mit "Via" ist hier insbesondere eine Durchkontaktierung zwischen Schaltungsebenen gemeint. Durch Einbringen von Vias wird also eine strukturell bedingte Schwäche in das Dokument eingebracht. Die Funktionalität des Dokuments unter Verzicht auf Vias zu erhalten bedeutet also einen Vorteil hinsichtlich der Biegbarkeit und mechanischen Zuverlässigkeit und der Lebensdauer des Dokuments.

Von besonderem weiterem Vorteil ist die einfache und kostengünstige Herstellbarkeit von Ausführungsformen des erfindungsgemäßen Dokuments, auch bei hohem Funktionsumfang des elektronischen Geräts, da keine kostenintensive und fertigungstechnisch aufwendige Kontaktierung in vertikaler Richtung in dem Dokumentenkörper erforderlich ist.

Ausführungsformen der Erfindung sind ferner besonders vorteilhaft, da die Kopplung der verschiedenen Schaltungsebenen durch einen Powerbus und/oder Datenbus einen modularen Aufbau des Dokuments und einen flexibel, je nach Kundenanforderung wählbaren Funktionsumfang des elektronischen Geräts ermöglicht.

Nach einer Ausführungsform der Erfindung ist in einer Schaltungsebene des Dokuments ein autarkes modulares Teil-System des elektronischen Geräts realisiert, welches über sein Kopplungselement mit den Teil-Systemen anderer Schaltungsebenen gekoppelt ist, um so die Funktionalitäten des elektronischen Geräts zu realisieren.

Nach einer Ausführungsform der Erfindung handelt es sich bei dem Dokument um eine Chipkarte, die ein standardisiertes Chipkartenformat aufweist, wie zum Beispiel das ID1 Format (85,60 mm x 53,98 mm), das ID2 Format (105 mm × 74 mm) oder das ID3 Format (125 mm x 88 mm) auf. Insbesondere kann die Dicke des Dokuments kleiner als 0,8 mm sein, bevorzugt kleiner als 0,6 mm, weiter bevorzugt kleiner als 0,5 mm und besonders bevorzugt kleiner als 0,4 mm.

In einem weiteren Aspekt betrifft die Erfindung ein Verfahren zur Herstellung eines Dokuments mit einem elektronischen Gerät. Das Verfahren beinhaltet die folgenden Schritte: Herstellung von Schichten, wobei mehrere der Schichten verschiedene elektronische Komponenten des elektronischen Geräts aufweisen, und wobei jede der Schichten zumindest ein Kopplungselement zur drahtlosen Kopplung zur Übertragung von Energie und/oder Daten zwischen den Komponenten von zumindest zwei der Schichten aufweist, und Formung eines Dokumentenkörpers durch stoffschlüssiges Verbinden der Schichten, wobei das elektronische Gerät durch die miteinander über die Schichten hinweg gekoppelte Komponenten gebildet wird.

Nach einer Ausführungsform der Erfindung erfolgt das stoffschlüssige Verbinden der Schichten durch ein Heiß-Kalt-Laminierverfahren. Die Lamination kann beispielsweise bei zumindest 120°C bis 200°C und einem Kalt-Flächendruck von 200 N/cm² bis 700 N/cm², vorzugsweise 300 N/cm² bis 600 N/cm² erfolgen.

Nach einer Ausführungsform der Erfindung werden ein oder mehrere Leiterbahnen auf eine der Schichten durch Galvanik/Ätztechnik, Inkjet oder andere Verfahren aufgebracht.

Nach einer Ausführungsform der Erfindung werden ein oder mehrere Leiterbahnen auf eine der Schichten aufgedruckt, wie zum Beispiel mit einer Silberleitpaste oder einem anderen druckbaren leitfähigen Material, wie zum Beispiel einem leitfähigen Polymer, um die Komponenten der betreffenden Schicht miteinander elektrisch zu verbinden und/oder um eine Antenne zur Einkopplung von Energie und/oder einem Datensignal von einem externen Lesegerät und/oder ein oder mehrere Kopplungselemente zu schaffen. Das Aufdrucken kann durch verschiedene Drucktechniken erfolgen, wie zum Beispiel durch Siebdruck, Inkjet-Druck oder Transfer-Druck, Rastertiefdruck, Stichtiefdruck, Offestdruck, indirekter Hochdruck (Letterset).

Nach einer Ausführungsform der Erfindung handelt es sich bei zumindest einer der Komponenten des elektronischen Geräts um eine Anzeigevorrichtung, d.h. ein sogenanntes Display. Bei der Anzeigevorrichtung kann es sich um eine bistabile Anzeigevorrichtung, eine elektrophoretische Anzeige, eine elektrochrome Anzeige, eine Flüssigkeitskristallanzeige (LCD), LED-Anzeige, insbesondere anorganische LED- oder organische LED-Anzeige (OLED), insbesondere ein active-matrix OLED, bistabile LCD-Anzeigen, zum Beispiel twisted nematic, super twisted nematic, cholesterische oder nematische LCD-Anzeigen, Drehelementanzeige, Balkenanzeige, Photolumineszenz-Löschungsanzeige oder eine Anzeige auf Basis des Elektrowetting-Effekts oder eine Hybridanzeige handeln.

Insbesondere kann es sich bei der Anzeigevorrichtung um eine flexible, bistabile Anzeige handeln. Solche Anzeigen sind z.B. aus US 2006/0250534 A1 bekannt. Weitere bistabile elektrophoretische Anzeigen sind beispielsweise aus WO 99/53371 und EP 1 715 374 A1 bekannt. Bistabile Anzeigen werden auch als "Electronic Paper Display" (EPD) bezeichnet.

Besonders bevorzugt ist eine Ausführungsform des Dokuments mit einem gedünnten Chip zur Ansteuerung der Anzeigevorrichtung und einer flexiblen Anzeigevorrichtung. Auf diese Art und Weise wird ein besonders dünnes, biegbares und gleichzeitig mechanisch robustes Dokument mit großem Funktionsumfang kostengünstig realisierbar.

Nach einer Ausführungsform der Erfindung hat das Dokument eine drahtlose Schnittstelle zu einem externen Lesegerät, die beispielsweise gemäß ISO 14443 A/B und/oder gemäß ICAO 9303 ausgebildet sein kann. Die drahtlose Kommunikation zwischen dem externen Lesegerät und dem Dokument kann dabei induktiv in einem Wellenlängenbereich von größer 1 MHz, insbesondere ca. 13,56 MHz, erfolgen. Die drahtlose Energieübertragung bzw. die drahtlose Datenübertragung zwischen den Schaltungsebenen des Dokuments erfolgt dabei so, dass es nicht zu Interferenzen mit dem Kommunikationskanal zwischen dem Dokument und dem externen Lesegerät kommt. Wenn beispielsweise die externe Schnittstelle des Dokuments zur Kommunikation mit dem externen Lesegerät induktiv ausgebildet ist, so kann die Energie- und Datenübertragung zwischen den Schaltungsebenen innerhalb des Dokuments optisch oder kapazitiv erfolgen, um jede gegenseitige Störung der Energie- und Datenübertragung zwischen dem Dokument und dem externen Lesegerät einerseits und zwischen den Komponenten verschiedener Schaltungsebenen des Dokuments andererseits zu verhindern. Wenn hingegen für die externe Kommunikation sowie für die interne Kommunikation der Komponenten des Dokuments dasselbe Übertragungsprinzip genutzt wird, wie zum Beispiel eine induktive Kopplung, so wird zum Beispiel hinsichtlich der Geometrie und/oder der Resonanzfrequenzen der entsprechenden Kopplungselemente oder über eine entsprechende Software (Kommunikation kann auch bei gleichen Resonanzfrequenzen erfolgen) sichergestellt, dass diese hinreichend weit auseinander liegen, um gegenseitige Interferenzen zu reduzieren oder zu verhindern.

Nach einer Ausführungsform der Erfindung ist in einer der Schaltungsebenen des Dokuments eine Abschirmung für den Chip angeordnet. Durch die Abschirmung wird elektromagnetische Strahlung von dem Chip abgeschirmt. Insbesondere Mikrowellen, Radiowellen und elektrische Entladung werden so von dem Chip abgeschirmt, um zum Beispiel eine Zerstörung des Chips zu vermeiden. Ein weiterer Vorteil der Abschirmung ist, dass von dem Chip abgegebene elektromagnetische Strahlung nicht von außen ausgelesen werden kann. Die Abschirmung kann durch zwei weichmagnetische Ferrite enthaltende Schichten ausgebildet sein, die den integrierten Schaltkreis beidseitig bedecken und so einen faradayschen Käfig bilden. Da das Dokument ferner keine vias haben muss, ist ferner ein besonders hoher Schutz gegen das Abhören der Kommunikation der elektronischen Komponenten mit dem Chip gegeben, was in Kombination mit der Abschirmung des Chips ein besonders hohes Maß an Sicherheit bewirkt.

Ausführungsformen der Erfindung sind besonders vorteilhaft, da das Dokument mit einer relativ geringen Anzahl von Prozessschritten herstellbar ist, und zwar insbesondere weil keine vias erforderlich sind. Der modulare Aufbau ermöglicht mehr Freiheitsgrade beim Design und Layout der einzelnen Teilsysteme des elektronischen Geräts, insbesondere aufgrund des vereinfachten Schaltungsdesigns und Routing.

Durch die dreidimensional verteilte Anordnung der Komponenten des elektronischen Geräts in dem Dokumentenkörper ist eine hohe Integrationsdichte möglich, welche die kostengünstige Realisierung eines elektronischen Geräts mit komplexen Funktionalitäten, insbesondere kryptografischen Funktionen und einer Anzeigevor richtung, erlaubt. Von besonderem Vorteil ist dabei ferner, dass Schaltungselemente der Komponenten, die Kopplungselemente und/oder die Leiterbahnen zur Kontaktierung der Komponenten und der Kopplungselemente sowie ggf. die Antenne auf eine Schaltungsebene des Dokuments, d.h. beispielsweise eine Laminatschicht, aufgedruckt werden können.

Unter dem Aspekt "Design for Testability" ist der modulare Aufbau des Dokuments ferner besonders vorteilhaft, da die auf den einzelnen Schaltungsebenen separat vorgefertigten Teil-Systeme des elektronischen Geräts zunächst separat getestet werden können, bevor sie zu dem Dokumentenkörper zusammengefügt werden. Dies hat den weiteren Vorteil, dass der Ausschuss bei der Produktion verringert werden kann.

Ein weiterer Vorteil der Erfindung ist, dass auf diese Weise ein hochsicheres Dokument bereitgestellt ist, das zugleich sehr fälschungssicher und kostengünstig herstellbar ist.

Im Weiteren werden Ausführungsformen der Erfindung mit Bezugnahme auf die Zeichnungen näher erläutert. Es zeigen:
- Figur 1: eine Explosionsdarstellung einer Ausführungsform eines erfindungsgemäßen Dokuments mit Power- und Datenbus,
- Figur 2: eine Explosionsdarstellung einer Ausführungsform eines erfindungsgemäßen Dokuments mit Power- und Datenbus sowie Bauelementebeschaltung,
- Figur 3: eine Explosionsdarstellung einer Ausführungsform eines erfindungsgemäßen Dokuments mit separatem Powerblock in jeder Schicht und Datenbus,
- Figur 4: eine Explosionsdarstellung einer Ausführungsform eines erfindungsgemäßen Dokuments mit separatem Powerblock in jeder Schicht und separaten Kopplungselementen,
- Figur 5: eine Diagramm zur Darstellung einer Ausführungsform eines erfindungsgemäßen Verfahrens.

Im Weiteren werden einander entsprechende Elemente der nachfolgenden Ausführungsformen mit denselben Bezugszeichen gekennzeichnet.

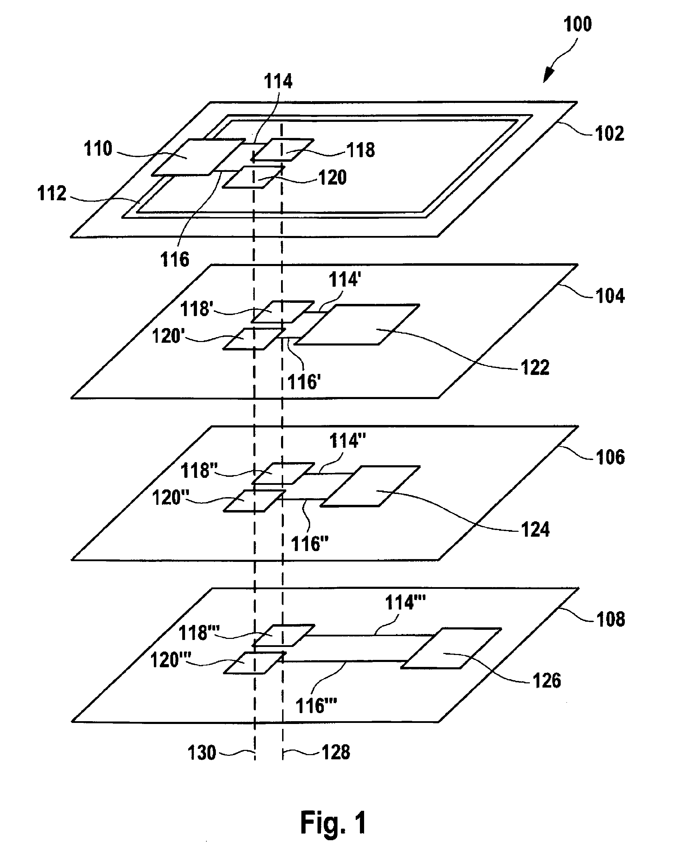

Die Figur 1 zeigt ein Dokument 100 in Explosionsdarstellung. Das Dokument 100 hat mehrere Schaltungsebenen 102, 104, 106 und 108. Jede der Schaltungsebenen kann auf einem Substrat realisiert sein, wie zum Beispiel auf einem Kunststoffsubstrat. Bei dem Substrat kann es sich um Polycarbonat oder einen anderen Kunststoff handeln. Zur Realisierung einer der Schaltungsebenen sind auf dem betreffenden Substrat ein oder mehrere Leiterbahnen z.B. aufgedruckt, und ein oder mehrere weitere Komponenten des elektronischen Geräts aufgebracht, wobei es sich um diskrete Komponenten oder auf das Substrat aufgedruckte Komponenten handeln kann.

Beispielsweise trägt die Schaltungsebene 102 einen Chip 110, wie zum Beispiel einen gedünnten Halberleiterchip. Insbesondere kann es sich bei dem Chip 110 um einen Flip-Chip handeln. Zu der Schaltungsebene 102 gehört ferner eine Antenne 112, die entlang der Ränder der Schaltungsebene 102 verläuft. Die Antenne 112 dient zur induktiven Einkopplung von Energie und/oder eines Datensignals von einem externen Lesegerät und/oder zum Senden eines Datensignals an das externe Lesegerät, beispielsweise nach einem RFID- oder NFC-Verfahren. Der Chip 110 ist mit der Antenne 112 elektrisch verbunden, wobei der Chip 110 hierzu zwei Kontaktstellen aufweist, die jeweils mit einem Ende der Antenne 112 verbunden sind. Diese Kontaktstellen können durch sogenannte Bumps, z.B. metallische Au, Ni/Au, Pd oder Solder Bumps realisiert sein. Innerhalb der Schaltungsebene 102 überbrückt also der Chip 110 auf diese Art und Weise die Antenne 112.

Der Chip 110 ist über Leiterbahnen 114 und 116 mit einem Kopplungselement 118 bzw. einem Kopplungselement 120 elektrisch verbunden. Das Kopplungselement 118 dient dabei zur Einkopplung von elektrischer Energie in die anderen Schaltungsebenen 104 bis 108, wohingegen das Kopplungselement 120 zur Realisierung eines Kommunikationskanals zwischen den Schaltungsebenen dient.

Die Schaltungsebene 104 beinhaltet hier eine Anzeigevorrichtung 122. Die Anzeigevorrichtung 122 kann als integralen Bestandteil einen Treiber beinhalten. Alternativ kann der Treiber auch in dem Chip 110 realisiert sein. Beispielsweise handelt es sich bei der Anzeigevorrichtung 122 um ein flexibles Aktiv-Matrix-OLED-Display. Die Schaltungsebene 104 beinhaltet zu der Schaltungsebene 102 analoge Kopplungselemente 118' und 122', die mit der Anzeigevorrichtung 122 über Leiterbahnen 114' und 116' elektrisch verbunden sind.

Die Schaltungsebene 106 beinhaltet einen elektronischen Speicher 124, wie zum Beispiel einen Speicherchip oder einen aufgedruckten Datenspeicher. Die Schaltungsebene 106 trägt wiederum Kopplungselemente 118" und 120", die über Leiterbahnen 114" bzw. 116" mit dem Speicher 124 elektrisch verbunden sind.

Die Schaltungsebene 108 beinhaltet ein Eingabeelement 126, welches mit den Kopplungselementen 118'" und 120'" über die Leiterbahnen 114'" bzw. 116'" elektrisch verbunden ist. Bei dem Eingabeelement 126 kann es sich zum Beispiel um ein Bedienelement, einen Fingerabdrucksensor, eine Kamera, insbesondere zur Aufnahme eines Irisscan, ein Touchpad zur Navigation auf der Anzeigevorrichtung 122, einen Druckschalter oder einen Drucksensor, oder einen Pufferkondensator handeln.

Die Kopplungselemente 118 der verschiedenen Schaltungsebenen bzw. die Kopplungselemente 120 der verschiedenen Schaltungsebenen sind hier senkrecht zu den Schaltungsebenen übereinander angeordnet, um so einen Powerbus 128 bzw. einen Datenbus 130 zu schaffen. Der Powerbus 128 dient zur drahtlosen Einkopplung von Energie in die Schaltungsebenen 104, 106 und 108 von der Schaltungsebene 102, welche die Antenne 112 trägt. Dagegen dient der Datenbus 130 zur Datenübertragung zwischen den verschiedenen Schaltungsebenen.

Beispielsweise beinhaltet der Chip 110 einen Spannungsregler, welcher zur Ansteuerung des Kopplungselements 118 dient. Der Spannungsregler wird durch die über die Antenne 112 in die Schaltungsebene 102 eingekoppelte Energie betrieben und steuert das Kopplungselement 118 der Schaltungsebene 102 über die Leiterbahn 114 so an, dass ein Teil dieser Energie über den Powerbus 128, d.h. in die Kopplungselemente 118', 118" und 118'" der darunter liegenden Schaltungsebenen, eingekoppelt wird, sodass die dort befindlichen Komponenten, d.h. die Anzeigevorrichtung 122, der Speicher 124 bzw. das Eingabeelement 126 mit elektrischer Energie versorgt werden.

Der Chip 110 kann ferner eine Schnittstelle zu dem Datenbus 130 aufweisen, über die Daten über das Kopplungselement 120 gesendet und empfangen werden können. Die Komponenten der anderen Schaltungsebenen, d.h. die Anzeigevorrichtung 122, der Speicher 124 und das Eingabeelement 126, verfügen ebenfalls über eine solche Schnittstelle, sodass die Daten zwischen beliebigen Komponenten der verschiedenen Schaltungsebenen ausgetauscht werden können.

Beispielsweise hat hierzu jede der Komponenten eine eindeutige Adresse, sodass mit Hilfe dieser Adresse ein Datensignal über den Datenbus 130 an die betreffende Komponente gesendet werden kann. Die Schnittstellen der verschiedenen Komponenten zu dem Datenbus 130 können dabei so ausgebildet sein, dass wahlweise die Sendung einer Unicast-Nachricht an nur eine einzige Komponente, einer Multicast-Nachricht an mehrere der Komponenten oder einer Broadcast-Nachricht an sämtliche der Komponenten ermöglicht wird. Auf diese Art und Weise lassen sich komplexe Funktionalitäten des durch die verschiedenen Schaltungsebenen gebildeten elektronischen Geräts auf effiziente Art und Weise realisieren.

Die Kopplungselemente 118 bzw. 120 sind optisch ausgebildet. Wenn die Kopplungselemente 118 und 120 dasselbe Kopplungsprinzip implementieren, wird zum Beispiel durch die Geometrie der Kopplungselemente sichergestellt, dass keine Interferenzen zwischen dem Powerbus 128 und dem Datenbus 130 entstehen.

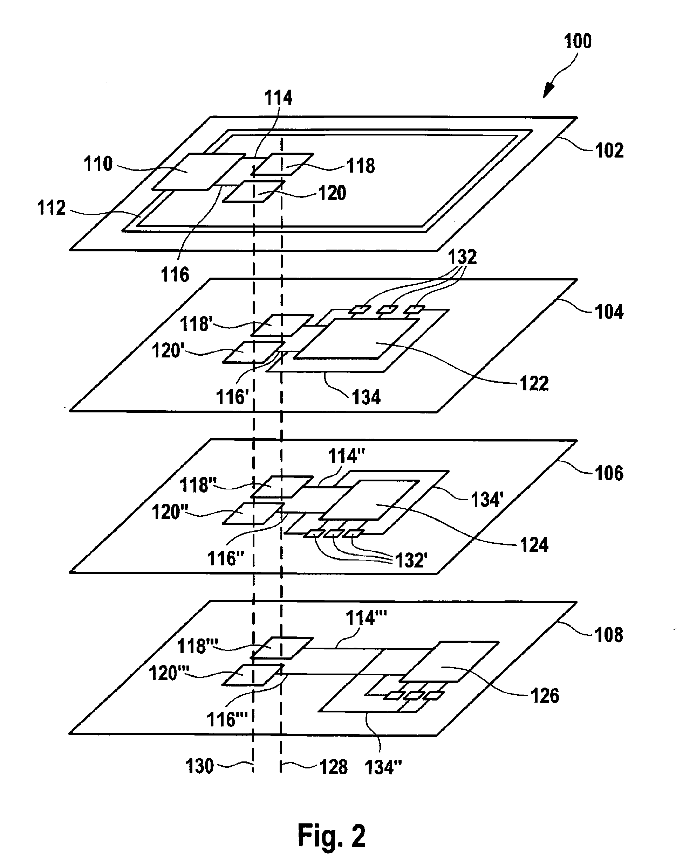

Die Figur 2 zeigt eine weitere Ausführungsform des Dokuments 100 mit einer Beschaltung der verschiedenen elektronischen Komponenten der Schaltungsebenen 104, 106 und 108 durch passive Bauelemente. Bei den passiven Bauelementen kann es sich um diskrete Bauelemente handeln oder um aufgedruckte Bauelemente. Beispielsweise beinhaltet die Schaltungsebene 104 passive Bauelemente 132, die über Leiterbahnen 134 mit der Anzeigevorrichtung 122 verschaltet sind. Der Speicher 124 der Schaltungsebene 106 ist über Leiterbahnen 134' mit passiven Bauelementen 132' beschaltet und das Eingabeelement 126 der Schaltungsebene 108 über Leiterbahnen 134" mit Bauelementen 132". Um eine besonders kompakte Bauform und hohe Integrationsdichte bei guten mechanischen Eigenschaften des Dokuments zu erreichen, sind sowohl die Bauelemente 132 als auch die Leiterbahnen 134 in den betreffenden Schaltungsebenen aufgedruckt.

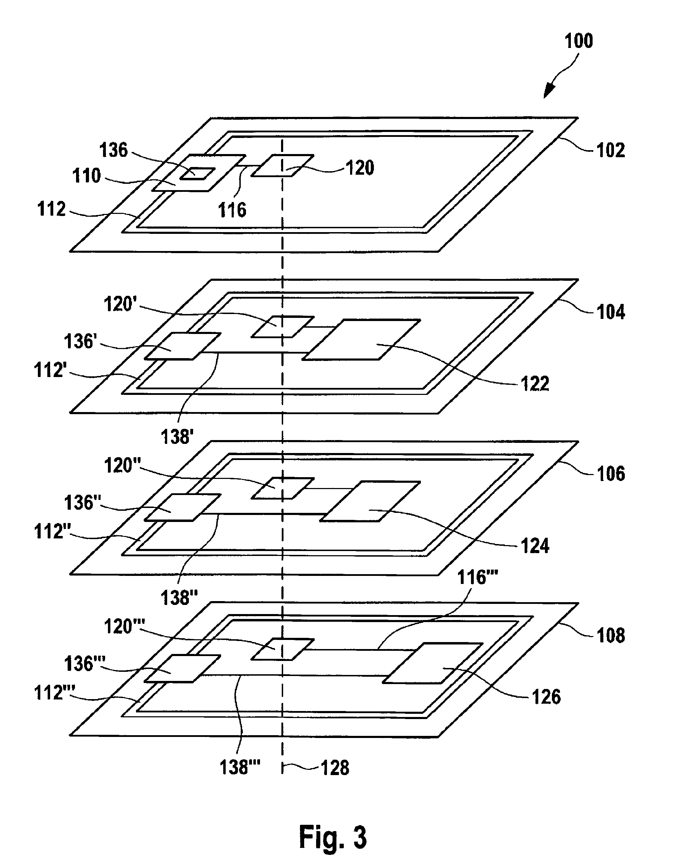

Die Figur 3 zeigt eine Ausführungsform des Dokuments 100, bei der jede Schaltungsebene eine Antenne 112 zur induktiven Einkopplung von Energie von einem externen Lesegerät trägt. Da die Energieversorgung jeder der Schaltungsebenen also autark ist, entfällt der Powerbus 128 hier. Neben einer Antenne hat jede der Schaltungsebenen hier eine Schaltung 136 zur Spannungsregelung. Jede der Schaltungen 136 ist über eine Leiterbahn 138 mit der jeweils zu versorgenden Komponente verbunden, wobei im Falle des Chips 110 die Schaltung 136 einen integralen Bestandteil der integrierten Schaltung des Chips 110 darstellen kann.

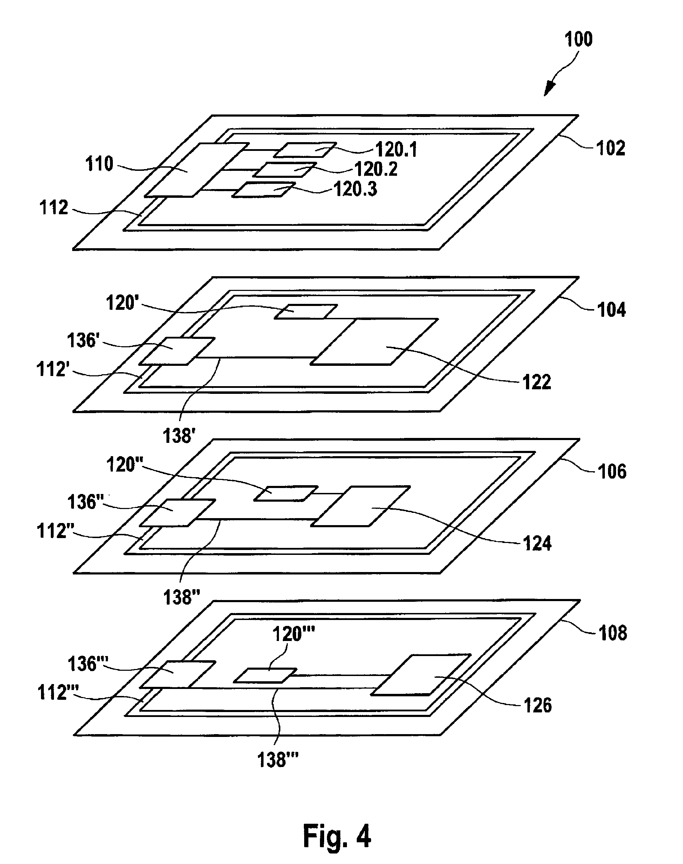

Die Figur 4 zeigt eine Ausführungsform eines erfindungsgemäßen Dokuments 100, bei der in der Schaltungsebene 102 ein separates Kopplungselement für jede der anderen Schaltungsebenen vorgesehen ist, wobei es sich bei der hier betrachteten Ausführungsform um Kopplungselemente 120 für die Datenübertragung handelt. Auf der Schaltungsebene 102 ist also ein Kopplungselement 120.1 zur Kopplung mit dem darunter befindlichen Kopplungselement 120' der Schaltungsebene 104, ein Kopplungselement 120.2 zur Kopplung mit dem darunter befindlichen Kopplungselement 120" der Schaltungsebene 106 und ein Kopplungselement 120.3 zur Kopplung mit dem darunter liegenden Kopplungselement 120"' der Schaltungsebene 108 vorgesehen.

Auf diese Art und Weise wird eine Datenübertragung zwischen dem Chip 110 einerseits und wahlweise der Anzeigevorrichtung 122, dem Speicher 124 und dem Eingabeelement 126 andererseits ermöglicht.

Neben den oben beschriebenen Ausführungsformen sind weitere Ausführungsformen möglich, die Elemente dieser Ausführungsformen miteinander kombinieren, wie zum Beispiel eine Ausführungsform des Dokuments 100 basierend auf der Ausführungsform gemäß Figur 4 mit nur einer Antenne 112 und einem Powerbus 128 oder andere Mischformen.

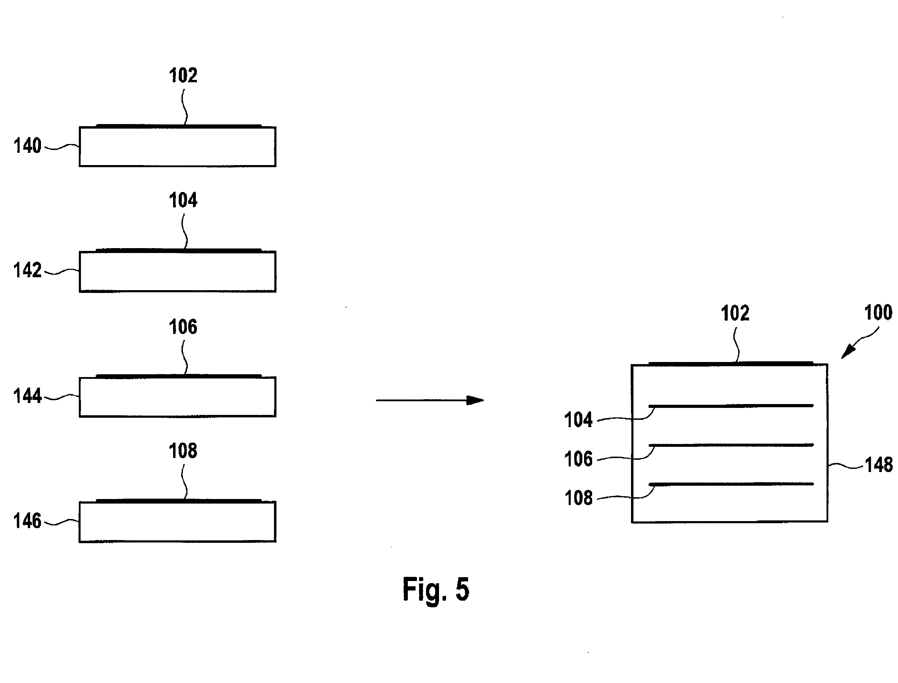

Die Figur 5 zeigt schematisch die Herstellung einer Ausführungsform des Dokuments 100. Zunächst werden die einzelnen Schaltungsebenen 102 bis 108 separat hergestellt und getestet, indem auf die entsprechenden Substrate 140, 142, 144 bzw. 146 jeweils ein Teil-System des elektronischen Geräts aufgebracht wird. Dies kann zum Beispiel drucktechnisch kombiniert mit Bondingverfahren erfolgen. Eine der Schaltungsebenen kann dabei drucktechnisch aufgebrachte Komponenten und, wie zum Beispiel eine Antenne, Leiterbahnen und/oder diskrete Bauelemente, und diskrete elektronische Komponenten, wie zum Beispiel einen Chip, eine Anzeigevorrichtung, einen Speicher oder ein Eingabeelement aufweisen, die mit den gedruckten Elementen über Bondingverfahren elektrisch verbunden werden. Die einzelnen Substrate, die die Teil-Systeme des elektronischen Geräts beinhalten, werden dann durch ein Laminationsverfahren miteinander stoffschlüssig verbunden, um so einen Dokumentenkörper 148 zu schaffen.

Besonders vorteilhaft ist es, wenn die Substrate 140 bis 146 aus demselben Kunststoff bestehen, sodass durch das Laminationsverfahren ein quasi monolithischer Dokumentenkörper 148 entsteht, der auch mit großem Aufwand nicht mehr entlang der Substratgrenzen aufgetrennt werden kann.

Auf der Oberseite und der Unterseite des Dokumentenkörpers 148 können weitere Schichten, wie zum Beispiel Schutzschichten, aufgebracht werden.

### Bezugszeichenliste

- 100: Dokument
- 102: Schaltungsebene
- 104: Schaltungsebene
- 106: Schaltungsebene
- 108: Schaltungsebene
- 110: Chip
- 112: Antenne
- 114: Leiterbahn
- 116: Leiterbahn
- 118: Kopplungselement
- 120: Kopplungselement
- 122: Anzeigevorrichtung
- 124: Speicher
- 126: Eingabeelement
- 128: Powerbus
- 130: Datenbus
- 132: Bauelement
- 134: Leiterbahn
- 136: Schaltung
- 138: Leiterbahn
- 140: Substrat
- 142: Substrat
- 144: Substrat
- 146: Substrat
- 148: Dokumentenkörper

## Patentansprüche

1. Dokument (100) mit einem Dokumentenkörper (148) und einem in dem Dokumentenkörper integrierten elektronischen Gerät, wobei
- das elektronische Gerät mehrere Komponenten (110, 122, 124, 126) aufweist, die in mehreren Schaltungsebenen (102, 104, 106, 108) in dem Dokument verteilt angeordnet sind,
- die Komponenten verschiedener Schaltungsebenen galvanisch voneinander getrennt sind, und
**dadurch gekennzeichnet, dass**
- die Komponenten der verschiedenen Schaltungsebenen optisch miteinander zur Energie- oder Datenübertragung gekoppelt sind,
- jede der Schaltungsebenen zumindest ein optisches Kopplungselement (120; 120, 120', 120", 120"') aufweist und
- jedes der optischen Kopplungselemente einen optischen Sender und einen optischen Empfänger aufweist.

2. Dokument (100) nach Anspruch 1, wobei die Kopplungselemente (120; 120, 120', 120", 120"') untereinander zur Bildung eines Bus (130) in dem Dokumentenkörper (148) angeordnet sind.

3. Dokument (100) nach einem der vorhergehenden Ansprüche, wobei der Dokumentenkörper (148) aus einem Material mit einer relativen Dielektrizitätszahl von 20 bis 100, vorzugsweise zwischen 30 und 80, besteht.

4. Dokument (100) nach einem der vorhergehenden Ansprüche, mit einem durch die Schaltungsebenen (102, 104, 106, 108) des Dokuments (100) hindurch verlaufenden drahtlosen Energie- und/oder Datenbus (128, 130) zur Kopplung der Komponenten verschiedener Schaltungsebenen.

5. Dokument (100) nach Anspruch 4, wobei zumindest eine der Schaltungsebenen (102; 102, 104, 106, 108) eine Antenne (112; 112, 112', 112", 112"') zur induktiven Einkopplung von Energie von einem externen Lesegerät in das Dokument (100) aufweist, wobei die Antenne mit einer Komponente (110; 110, 136', 136", 136"') dieser Schaltungsebene verbunden ist, und wobei diese Komponente zur Einkopplung eines Teils der in die Antenne eingekoppelten Energie in den Energie- und/oder Datenbus (128, 130; 128) ausgebildet ist.

6. Dokument (100) nach einem der vorhergehenden Ansprüche, wobei jede der Schaltungsebenen (102, 104, 106, 108) eine separate Antenne (112, 112', 112", 112"'} zur induktiven Einkopplung von Energie von einem externen Lesegerät aufweist.

7. Dokument (100) nach einem der vorhergehenden Ansprüche, wobei eine der Schaltungsebenen (102) ein separates Kopplungselement (120.1, 120.2, 120.3) für jede andere Schaltungsebene (104, 106, 108) aufweist.

8. Dokument (100) nach Anspruch 4, wobei der Datenbus (130) einen Kommunikationskanal zwischen den Komponenten auf einer Frequenz bildet, die von der Resonanzfrequenz der Antenne (112) verschieden ist.

9. Dokument (100) nach einem der vorhergehenden Ansprüche, wobei der Dokumentenkörper (148) einen Schichtaufbau hat, und mehrere Schichten (140, 142, 144, 146) des Schichtaufbaus je eine Schaltungsebene (102, 104, 106, 108) bilden, die eine oder mehrere Komponenten des elektronischen Geräts trägt, wobei die mehreren Schichten (140, 142, 144, 146) des Schichtaufbaus stoffschlüssig miteinander verbunden sind.

10. Dokument (100) nach Anspruch 9, wobei die Komponenten des elektronischen Gerätes und deren Verdrahtung (114, 116, 134, 138) ausschließlich in den Schaltungsebenen (102, 104, 106, 108) angeordnet sind.

11. Dokument (100) nach einem der vorhergehenden Ansprüche, wobei der Dokumentenkörper (148) monolithisch aus einem Kunststoff ausgebildet ist, wobei es sich bei dem Dokumentenkörper (148) insbesondere um ein monolithisches Laminat handelt.

12. Dokument (100) nach einem der vorhergehenden Ansprüche, wobei das elektronische Gerät eine oder mehrere der folgenden elektronischen Komponenten beinhaltet: Mikroprozessor, Anzeigevorrichtung (122), elektronischer Speicher (124), Eingabeelement (126), Sensor, insbesondere biometrischer Sensor, wie zum Beispiel Fingerabdrucksensor, Kamera, kryptografische Logikkomponente, RFID-Komponente, NFC-Komponente, Aktuator, Spannungsregler, Touchsensor, Touchpad, Drucksensor, Pufferkondensator, Chip (110).

13. Dokument (100) nach einem der vorhergehenden Ansprüche, wobei es sich bei dem Dokument (100) um ein Wert- oder Sicherheitsdokument, wie zum Beispiel um ein Ausweisdokument, wie zum Beispiel einen Personalausweis, Reisepass, Führerschein, Fahrzeugbrief, Fahrzeugschein oder Firmenausweis, oder ein Zahlungsmittel, wie zum Beispiel eine Banknote, eine Kreditkarte oder einen sonstigen Berechtigungsnachweis, wie zum Beispiel eine Eintrittskarte, Fahrschein, insbesondere ein electronic ticket, einen Frachtbrief, ein Visum, ein Passbuch oder eine Chipkarte handelt.

14. Verfahren zur Herstellung eines Dokuments (100) nach einem der vorhergehenden Ansprüche mit folgenden Schritten:
- Herstellung von Schichten (140, 142, 144, 146), wobei mehrere der Schichten verschiedene elektronische Komponenten (110, 122, 124, 126) des elektronischen Geräts aufweisen, und wobei jede der Schichten zumindest ein optisches Kopplungselement (120; 120, 120', 120", 120"') mit einem optischen Sender und einem optischen Empfänger zur drahtlosen optischen Kopplung für die Übertragung von Energie und/oder Daten zwischen den Komponenten von zumindest zwei der Schichten aufweist,
- Formung des Dokumentenkörpers (148) durch stoffschlüssiges Verbinden der Schichten, wobei das elektronische Gerät durch die miteinander über die Schichten hinweg optisch gekoppelten Komponenten gebildet wird.

15. Verfahren nach Anspruch 14, wobei die Formung des Dokumentenkörpers (148) aus den Schichten (140, 142, 144, 146) durch ein Heiß-Kalt-Laminierverfahren durchgeführt wird, wobei die Schichten aus demselben Kunststoff bestehen, sodass ein monolithischer Dokumentenkörper (148) resultiert.

## Claims

1. A document (100) comprising a document body (148) and an electronic device integrated in the document body, wherein
- the electronic device has a plurality of components (110, 122, 124, 126), which are distributed in the document in a plurality of circuit planes (102, 104, 106, 108),
- the components in different circuit planes are galvanically separated from one another, and
**characterised in that**
- the components in the different circuit planes are optically coupled with one another for energy or data transfer,
- each of the circuit planes has at least one optical coupling element (120; 120, 120', 120" , 120"'), and
- each of the optical coupling elements has an optical transmitter and an optical receiver.

2. The document (100) according to Claim 1, wherein the coupling elements (120; 120, 120', 120", 120''') are arranged one beneath the other to form a bus (130) in the document body (148).

3. The document (100) according to one of the preceding claims, wherein the document body (148) consists of a material having a relative permittivity from 20 to 100, preferably between 30 and 80.

4. The document (100) according to one of the preceding claims, comprising a wireless energy and/or data bus (128, 130) extending through the circuit planes (102, 104, 106, 108) of the document (100) in order to couple the components located in different circuit planes.

5. The document (100) according to Claim 4, wherein at least one of the circuit planes (102; 102, 104, 106, 108) has an antenna (112; 112, 112', 112'', 112"') for inductively coupling energy from an external reader into the document (100), wherein the antenna is connected to a component (110; 110, 136', 136", 136"') of this circuit plane, and wherein this component is configured to couple some of the energy coupled into the antenna into the energy and/or data bus (128, 130; 128).

6. The document (100) according to one of the preceding claims, wherein each of the circuit planes (102, 104, 106, 108) has a separate antenna (112, 112', 112'', 112''') for inductively coupling in energy from an external reader.

7. The document (100) according to one of the preceding claims, wherein one of the circuit planes (102) has a separate coupling element (120.1, 120.2, 120.3) for each other circuit plane (104, 106, 108).

8. The document (100) according to Claim 4, wherein the data bus (130) forms a communication channel between the components at a frequency that is different from the resonance frequency of the antenna (112).

9. The document (100) according to one of the preceding claims, wherein the document body (148) has a layered structure, and a plurality of layers (140, 142, 144, 146) of the layered structure each form a circuit plane (102, 104, 106, 108) that carries one or more components of the electronic device, wherein the plurality of layers (140, 142, 144, 146) of the layered structure are connected to each other in an integrally bonded manner.

10. The document (100) according to Claim 9, wherein the components of the electronic device and the wiring thereof (114, 116, 134, 138) are arranged exclusively in the circuit planes (102, 104, 106, 108).

11. The document (100) according to one of the preceding claims, wherein the document body (148) is formed monolithically from a plastic, wherein the document body (148) is a monolithic laminate in particular.

12. The document (100) according to one of the preceding claims, wherein the electronic device contains one or more of the following electronic components: microprocessor, display device (122), electronic memory (124), input element (126), sensor, in particular a biometric sensor, such as a fingerprint sensor, camera, cryptographic logic component, RFID component, NFC component, actuator, voltage regulator, touch sensor, touchpad, pressure sensor, buffer capacitor, chip (110).

13. The document (100) according to one of the preceding claims, wherein the document (100) is a value or security document, such as an identification document, such as an identity card, passport, driver's licence, vehicle registration document, vehicle licence or company ID, or a payment means, such as a banknote, a credit card or another proof of authorisation, such as an entry card, ticket, in particular an electronic ticket, a waybill, a visa, a passport book or a chip card.

14. A method for producing a document (100) according to one of the preceding claims, said method comprising the following steps:
- producing layers (140, 142, 144, 146), wherein a plurality of the layers have different electronic components (110, 122, 124, 126) of the electronic device, and wherein each of the layers has at least one optical coupling element (120; 120, 120', 120", 120''') with an optical transmitter and an optical receiver for wireless optical coupling for the transfer of energy and/or data between the components of at least two of the layers,
- forming the document body (148) by means of integrally bonded connection of the layers, wherein the electronic device is formed by the components optically coupled to one another over the layers.

15. The method according to Claim 14, wherein the forming of the document body (148) from the layers (140, 142, 144, 146) is performed by means of a hot/cold lamination process, wherein the layers consist of the same plastic, such that a monolithic document body (148) results.

## Revendications

1. Document (100) avec un corps de document (148) et un appareil électronique intégré dans le corps du document, dans lequel
- l'appareil électronique présente plusieurs composants (110, 122, 124, 126) qui sont disposés distribués sur plusieurs plans de circuit (102, 104, 106, 108) dans le document,
- les composants des divers plans de circuit sont séparés les uns des autres de façon galvanique, et
**caractérisé en ce que**
- les composants des divers plans de circuit sont couplés ensemble de manière optique pour la transmission d'énergie ou de données,
- chacun des plans de circuit présente au moins un élément de couplage optique (120 ; 120, 120', 120", 120"') et
- chacun des éléments optiques présente un émetteur optique et un récepteur optique.

2. Document (100) selon la revendication 1, dans lequel les éléments de couplage (120 ; 120, 120', 120", 120"') sont disposés les uns sous les autres dans le corps de document (148) en vue de former un bus (130).

3. Document (100) selon l'une des revendications précédentes, dans lequel le corps de document (148) est constitué d'un matériau avec un facteur de permittivité diélectrique relatif de 20 à 100, de préférence entre 30 et 80.

4. Document (100) selon l'une des revendications précédentes, avec un bus de d'énergie et/ou de données (128, 130) s'étendant sans fil à travers les plans de circuit (102, 104, 106, 108) du document (100) pour le couplage des composants des divers plans de circuit.

5. Document (100) selon la revendication 4, dans lequel au moins l'un des plans de circuit (102 ; 102, 104, 106, 108) présente une antenne (112 ; 112, 112', 112", 112'") pour un couplage inductif d'énergie dans le document (100) provenant d'un appareil de lecture externe, dans lequel l'antenne est reliée avec un
composant (110 ; 110, 136', 136", 136"') de ce plan de circuit, et dans lequel ce composant est conçu pour le couplage d'une partie de l'énergie couplée dans l'antenne dans le bus d'énergie et/ou de données (128, 130 ; 128).

6. Document (100) selon l'une des revendications précédentes, dans lequel chacun des plans de
circuit (102, 104, 106, 108) présente une antenne (112, 112', 112", 112"') séparée pour le couplage inductif d'énergie à partir d'un appareil de lecture externe.

7. Document (100) selon une des revendications précédentes, dans lequel un des plans de circuit (102) présente un élément de couplage (120.1, 120.2, 120.3) séparé pour chacun des autres plans de circuit (104, 106, 108).

8. Document (100) selon la revendication 4, dans lequel le bus de données (130) forme un canal de communication entre les composants sur une fréquence qui est différente de la fréquence de résonance de l'antenne (112).

9. Document (100) selon l'une des revendications précédentes, dans lequel le corps de document (148) a un montage en couches, et plusieurs couches (140, 142, 144, 146) du montage en couches forment chaque fois un plan de circuit (102, 104, 106, 108), qui porte un ou plusieurs composants de l'appareil électronique, dans lequel les nombreuses couches (140, 142, 144, 146) du montage en couches sont reliées entre elles par complémentarité des matières.

10. Document (100) selon la revendication 9, dans lequel les composants de l'appareil électronique et leur câblage (114, 116, 134, 138) sont disposés exclusivement dans les plans de circuit (102, 104, 106, 108).

11. Document (100) selon l'une des revendications précédentes, dans lequel le corps de document (148) est conçu monolithique dans une matière synthétique, dans lequel il s'agit en particulier d'un stratifié monolithique dans le cas du corps de document (148).

12. Document (100) selon l'une des revendications précédentes, dans lequel l'appareil électronique contient un ou plusieurs parmi les composants électroniques suivants : microprocesseur, dispositif d'affichage (122), mémoire électronique (124), élément de saisie (126), capteur, notamment, capteur biométrique, comme par exemple, un capteur pour les empreintes digitales, caméra, composants logiques cryptographiques, composants RFID, composants NFC, actionneur, régulateur de tension, capteur sensoriel au toucher, pavé tactile, capteur de pression, condensateur tampon, puce (110).

13. Document (100) selon l'une des revendications précédentes, dans lequel il s'agit d'un document de valeur ou de sécurité, comme, par exemple, un document d'identité, comme, par exemple, une carte d'identité, un passeport, une permis de conduire, une carte grise, un permis de circulation ou une carte d'entreprise, ou un moyen de paiement, comme, par exemple, un billet de banque, une carte de crédit ou un autre carte de légitimation, comme, par exemple, une carte d'entrée, un passe ou une carte à puce, dans le cas du document (100).

14. Procédé de fabrication d'un document (100) selon l'une des revendications précédentes, avec les étapes suivantes :
- fabrication de couches (140, 142, 144, 146), où plusieurs parmi les couches présentent divers composants électroniques (110, 122, 124, 126) de l'appareil électronique, et où chacune des couches présente au moins un élément de couplage optique (120 ; 120, 120', 120", 120"') avec un émetteur optique et un récepteur optique pour un couplage optique sans fil destiné à la transmission d'énergie et/ou de données entre les composants d'au deux parmi les couches,
- formation du corps de document (148) par une liaison par complémentarité des matières des couches, où l'appareil électronique est formé par les composants couplés optiquement ensemble par l'intermédiaire des couches.

15. Procédé selon la revendication 14, dans lequel la formation du corps de document (148) est effectuée par un procédé de stratification chaud-froid des couches (140, 142, 144, 146), dans lequel les couches sont constituées de la même matière synthétique de sorte qu'il en résulte un corps de document (148) monolithique.
